**Europäisches Patentamt**

**European Patent Office**

**Office européen des brevets**

(11) Veröffentlichungsnummer: **0 304 996 B1**

(12) **EUROPÄISCHE PATENTSCHRIFT**

(45) Veröffentlichungstag der Patentschrift:
27.03.91 Patentblatt 91/13

(51) Int. Cl.⁵: **G01N 19/04**

(21) Anmeldenummer: **88201766.8**

(22) Anmeldetag: **18.08.88**

(54) Vorrichtung zum Bestimmen der Haftfähigkeit von Dichtstoffen an Substraten.

(30) Priorität: 28.08.87 DE 8711676 U

(43) Veröffentlichungstag der Anmeldung:
01.03.89 Patentblatt 89/09

(45) Bekanntmachung des Hinweises auf die
Patenterteilung:
27.03.91 Patentblatt 91/13

(84) Benannte Vertragsstaaten:
AT CH DE ES FR GB GR IT LI NL SE

(56) Entgegenhaltungen:
DE-U- 7 936 221
DE-U- 8 711 676
US-A- 3 564 911

(56) Entgegenhaltungen:
TECHNISCHE RUNDSCHAU Band 78, Nr. 10,
März 1986, Bern, Schweiz; Seiten 20-23; T.
Krist: "Das Prüfen von Metall-Klebverbindungen"
INDUSTRIAL LABORATORY Band 49, Nr. 12,
Dezember 1983; New York, USA, Seiten
1274-1276; Y.N. BORISENKO et al.: "Universal
device for measuring the adhesion of thin
films"

(73) Patentinhaber: METALLGESELLSCHAFT AG
Reuterweg 14 Postfach 3724
W-6000 Frankfurt/M.1 (DE)

(72) Erfinder: Theobald, Reiner
Hadrianstrasse 42
W-6000 Frankfurt am Main (DE)
Erfinder: Unger, Gerfried, Dr.
Mittelweg 50
W-6000 Frankfurt am Main (DE)

## Beschreibung

Die Neuerung betrifft eine Vorrichtung zum Bestimmen der Haftfähigkeit von Dichtstoffen an metallischen und nichtmetallischen Substraten, insbesondere Abstandhaltern für die Herstellung von Mehrscheibenisolierglaseinheiten.

Die Herstellung von Isolierglaseinheiten erfolgt üblicherweise nach dem Klebeverfahren. Das heißt, zwischen die Scheibenränder mindestens zweier Scheiben werden beidseitig mit thermoplastischem Klebemittel beschichtete, vorzugsweise metallische Abstandhalterprofile gebracht und die Anordnung unter Druck verbunden. Die zwischen Abstandhalterrücken und Scheibenrändern ausgebildete Nut wird mit – den Randverbund herstellenden – Dichtstoffen auf Basis von z.B. Polysulfidpolymeren oder Polyurethanen gefüllt. Diese elastischen Klebedichtstoffe müssen den Bewegungen der Glasscheiben der Isolierglaseinheit standhalten können, die durch Luftdruckschwankungen, Winddruck, Schalldruck, thermische Einflüsse oder sonstige mechanische Belastung, wie unsachgemäße Handhabung, auftreten können. Die Haftfähigkeit bzw. Verbundfestigkeit des Dichtstoffs am Substrat sowie seine Kohäsionsfestigkeit sind daher für die technische Praxis des Herstellers von Mehrscheibenisolierglaseinheiten wichtige Kennwerte, die üblicherweise an Prüfkörpern ermittelt werden. Hierzu werden Geräte für physikalische Prüfverfahren verwendet, deren Wesen in der Zerstörung des Verbunds besteht. Mit diesen Prüfverfahren werden je nach Methode Kennwerte für die Verbundfestigkeit bzw. Haftfestigkeit ermittelt. Dabei liefert jede Prüfmethode nur einen der jeweiligen Methode zuordenbaren Kennwert, der zwar unter Berücksichtigung der vielfältigen Einflußfaktoren eine Aussage zur Verbundfestigkeit gestattet, aber keine Verallgemeinerungen zuläßt. Angewandte Prüfverfahren für die Haftfestigkeit sind beispielsweise der Zug-, Scher- oder Schältest, wie in : TECHNISCHE RUNDSCHAU ; Band 78, Nr. 10 ; März 1986 ; Bern, Schweiz ; Seiten 20-23 ; T. KRIST : "Das Prüfen von Metall- Klebverbindungen" beschrieben. Eine Vorrichtung zur Bestimmung der Haftfestigteit von Klebdichtstoffen durch Zugbeanspruchung ist aus der DE-U-7 936 221 betannt.

In der betrieblichen Praxis wird allgemein zur Beurteilung der Haftfähigkeit des Dichtstoffes am Abstandhalter von der anhaftenden Menge des Dichtstoffes auf der Oberfläche des Abstandhalters (Abstandhalterrücken) ausgegangen, die in einfacher Weise nach dem Heraushebeln desselben aus einer ausgehärteten Dichtstoffprobe sichtbar verbleibt. Dichtstoffe mit geringer Eigenfestigkeit (Kohäsionsfestigkeit) reißen naturgemäß eher in der Masse und täuschen so einen hohen Anteil von auf dem Abstandhalter verbliebenen Dichtstoff vor. Dichtstoffe mit hoher Eigenfestigkeit benötigen größeren Kraftaufwand, um in der Masse zu reißen. Somit besteht die Möglichkeit, daß bei der höheren Kraft weniger Dichtstoffreste auf dem Abstandhalter zurückbleiben, weil der Dichtstoff dann eher dazu neigt, in Grenznähe zum Substrat zu reißen. Das Randverbundsystem würde somit schlechter bewertet, obwohl die Forderung nach hoher Dichtstoff-Festigkeit im Randverbund erfüllt ist.

Der Neuerung liegt die Aufgabe zugrunde, eine einfache Prüfvorrichtung für die betriebliche Praxis der Herstellung von Isolierglaseinheiten zu schaffen, mit dem Dichtstoffe für Mehrscheibenisolierglaseinheiten bezüglich ihrer Haftfähigkeit an metallischen und nichtmetallischen Substraten einfach, schnell und reproduzierbar geprüft werden können.

Die Neuerung löst diese Aufgabe mit einer Vorrichtung zum Bestimmen der Haftfähigkeit von Dichtstoffen an metallischen und nichtmetallischen Substraten, insbesondere Abstandhaltern für Mehrscheibenisolierglas, die gemäß der Neuerung dadurch gekennzeichnet ist, daß auf einer Grundplatte (1) ein Belastungshebel (2) mit verschiebbarem Gewicht (3) über ein Schneidenlager (4, 4a) gelagert ist, wobei das andere Hebelende (5) gabelförmig und mit Einrichtungen (6) an beiden Gabelenden zur Aufnahme eines Dichtstoff-Prüfkörpers (7) ausgebildet ist und unterhalb des gabelförmigen Hebelendes (5) auf der Grundplatte (1) eine korrespondierende gabelförmige Haltevorrichtung (8) mit Einrichtungen (9) an beiden Gabelenden zum Gegenhalt des Prüfkörpers angebracht ist.

Das Belastungsgewicht (3) wird entlang einer Skala des Belastungshebels (2) bewegt, wobei das Gewicht jeweils in Markierungen (11) mittels Federraster (10) eingerastet wird.

Der Werkstoff des Schneidenlagers ist zweckmäßig gehärtet. Der Belastungshebel kann als Flach- oder Rundprofil hohl oder massiv ausgebildet sein oder eine sonstige geeignete Profilform aufweisen.

Mit dem an sich bekannten Prinzip des zweiarmigen Hebels wird mit der neuerungsgemäßen Vorrichtung in einfacher Weise die Haftfähigkeit des zwischen zwei Abstandhalter eingebrachten bzw. gehafteten Dichtstoffs an einem Prüfkörper gemessen. Der Prüfkörper (7) ist vorzugsweise durch zwei metallische Abstandhalter-Hohlprofile (12) gebildet, zwischen deren einander zugekehrten Abstandhalter-Rücken (13) der Dichtstoff (14) eingebracht werden kann.

Unter Haftfähigkeit wird im Sinne der Neuerung das Vermögen eines Dichtstoffs verstanden, an einem bestimmten Substrat, wie Abstandhalterprofil, unter einer bestimmten Belastung zu haften. Dabei ist es für den Fachmann selbstverständlich, daß der Dichtstoff nur an einem trockenen und fettfreien Substrat eingebracht werden kann.

Mit der neuerungsgemäßen Vorrichtung wird als Haftfähigkeit die Zeitspanne ermittelt, unter welcher ein zwischen zwei Substratflächen gehafteter Dichtstoff bei konstanter Belastung abreißt oder Bruch in der Masse eintritt. Zweckmäßig wird die Haftfähigkeit in der Weise ermittelt, daß eine Zeitspanne vorgegeben und geprüft wird, ob der Dichtstoff während dieser Zeitspanne voll am Substrat haftet. Letzteres Vorgehen hat sich in der Praxis als sehr vorteilhaft erwiesen. Dabei wird eine empirisch ermittelte ausreichende Zeitspanne festgelegt, während der sich der Dichtstoff bei konstanter Belastung nicht vom Abstandhalter löst. Dies hat den Vorteil, daß die Prüfung nicht bis zum Bruch des Dichtstoffs fortgesetzt werden muß. Es genügt vielmehr, in aller Regel in der betrieblichen Praxis zu einer ja/nein-Aussage zu gelangen, wodurch sich die Prüfzeit in der betrieblichen Praxis erheblich verkürzt.

Zur Herstellung eines derartigen Prüfkörpers werden zweckmäßig zwei metallische Abstandhalter-Hohlprofile beliebiger Länge auf einer Unterlage in einen bestimmten parallelen Abstand von z.B. 12 mm mit einander zugekehrten Rücken eingespannt und der Dichtstoff in den Zwischenraum eingebracht, sauber abgerakelt und an der Oberfläche des Abstandhalterrückens gehaftet. Nach Aushärten des Dichtstoffs wird der Verbundkörper in Stücke gleicher Länge von beispielsweise 20 mm zersägt und diese als Prüfkörper bereitgestellt.

In die beiden Hohlprofile des Prüfkörpers können stabartige Einlegeteile eingeschoben werden, deren Querschnitt dem Hohlprofil angepaßt ist. Es ist nicht erforderlich, daß das stabartige Einlegeteil (15) über die gesamte Länge dem Querschnitt des Hohlprofils angepaßt ist. Zweckmäßig sind die über das Abstandhalterprofil hinausstehenden Abschnitte (16) des Einlegeteils (15) von kleinerem und vorzugsweise kreisförmigem Querschnitt.

Mittels der stabartigen Einlegeteile (15) wird der Prüfkörper (7) in die gabelförmigen Haltevorrichtungen (5, 8) eingebracht. Dabei entspricht dem gabelförmig ausgebildeten Hebelende (5) des Belastungshebels (2) eine gabelförmig ausgebildete Haltevorrichtung (8), die auf der Grundplatte (1) fest oder lösbar angebracht ist.

Die gabelförmigen Haltevorrichtungen (5, 8) besitzen an den Gabelenden Einrichtungen (6, 9), in die der Prüfkörper (7) mittels der stabartigen Einlegeteile (15) eingebracht wird. Diese Einspanneinrichtungen können beispielsweise hakenförmig, ösenartig, als Klemmen oder Lochbohrungen ausgebildet sein.

Nach einer weiteren Ausgestaltung der Neuerung können auch Prüfkörper mit Vollprofilen in der Vorrichtung geprüft werden, wobei die Einspanneinrichtungen, beispielsweise Schraubklemmen, darauf abgestimmt sind.

Die Vorteile der Vorrichtung gemäß der Neuerung sind in der einfachen Bauweise zu sehen, ferner in der ökonomischen, praxisgerechten Herstellung der Prüfkörper, in der guten Handhabbarkeit infolge eines über die Anwendung des Hebelprinzips reduzierten Gewichts bei gleichzeitig definierten Prüfverhältnissen von Dichtstoffen auf Haftfähigkeit an Abstandhaltern aus Metall oder nichtmetallischem Werkstoff, wie kunststoff.

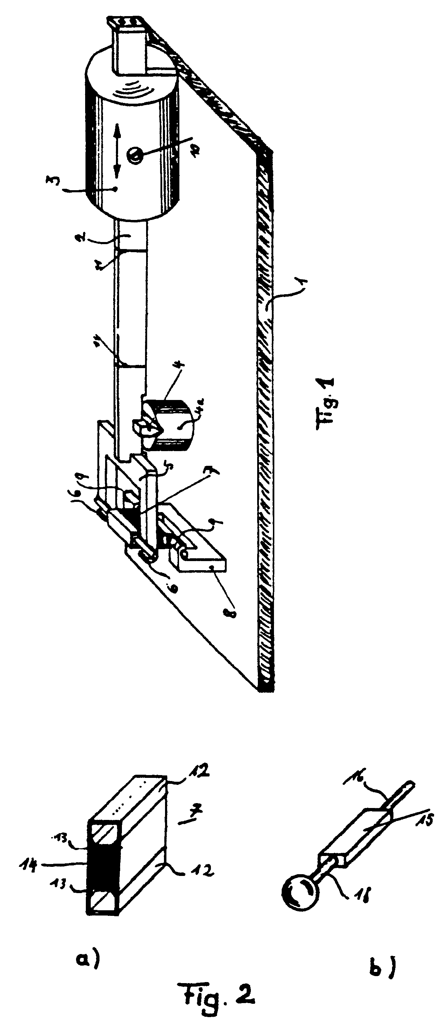

Die Vorrichtung gemäß der Neuerung wird anhand der Figuren 1 und 2 sowie der Beispiele näher erläutert.

In der Fig. 1 ist auf der Grundplatte (1) ein Schneidenlager angebracht. Es wird aus dem Auflagebock (4a) und der Schneide (4) gebildet. Ferner trägt die Grundplatte (1) die gabelförmige Haltevorrichtung (8) mit hakenförmigen Enden (9). Diese Teile sind mit der Grundplatte fest bzw. lösbar verbunden. Auflagebock (4a) und gabelförmige Haltevorrichtung (8) können auch einteilig gestaltet sein. Der auf dem Schneidenlager (4, 4a) gelagerte Belastungshebel (2) weist gekerbte Markierungen (11) auf, wie Löcher oder Vertiefungen, in welche das Federraster (10) des Schiebegewichts (3) einrastet. Der andere Hebelarm jenseits vom Unterstützungspunkt (Schneidenlager) ist am Ende gabelförmig (5) ausgebildet, die Gabelenden tragen hakenartige Vertiefungen (6) zur Aufnahme des Prüfkörpers (7).

Fig. 2a zeigt einen Prüfkörper (7). Zwischen zwei Abstandhalterprofilen (12) ist über die Abstandhalter-Rücken (13) der Dichtstoff (14) eingebracht.

In Fig. 2b ist ein stabartiger Einlegeteil (15) für den Einschub in die Hohlprofile (12) dargestellt.

Beispiel 1

In der neuerungsgemäßen Vorrichtung des in Fig. 1 dargestellten Aufbaus wurden mehrere Dichtstoff-Prüfkörper geprüft.

Zur Herstellung der Dichtstoff-Probekörper wurden zwei ca. 300 mm lange und 12 mm breite Abstandhalterprofile (Hohlprofile aus Aluminium) mechanisch mit Stahlwolle gereinigt und mittels Perchloräthylen entfettet. Die gereinigten trockenen Profile wurden sodann parallel mit einander zugekehrten Rücken im Abstand von 12 mm auf einer mit Trennfolie belegten Glasunterlage eingespannt. In die Fuge zwischen beiden Profilrücken wurde eine Dichtstoffmasse auf Basis Polysulfidpolymer mittels Spritzpistole eingebracht, glatt gestrichen und während 24 h bei 20°C ausgehärtet. Der Verbundkörper wurde anschließend in mehrere Probekörper von jeweils 20 mm Länge zersägt und 6 Probekörper geprüft. In die beiden Hohlprofile des jeweiligen Prüfkörpers wurden sodann jeweils ein stabartiges Einlegeteil entsprechend der Abbildung der Fig. 2 eingeschoben, dessen stabartiges Ende einen Durchmesser von 4 mm aufwies, während das ca. 20 mm lange Mittelteil von rechteckigem querschnitt und ca. 10 mm Seitenlänge und 3 mm Dicke war. Die stabartigen Enden wurden in die hakenförmig ausgeführten Enden der oberen bzw. unteren Gabel eingelegt und mit dem verschiebbaren Gewicht wurde eine Belastung von 0,3 N/mm² eingestellt. Während einer Prüfdauer von 3 Std. trat an den 6 Proben weder Ablösen vom Substrat, noch ein Bruch in der Masse ein. Dieses Ergebnis änderte sich auch nicht bei einer 24-stündigen Belastungszeit.

Mit der genannten Belastung von 0,3 N/mm² wird eine ausreichende und praxisgerechte Haftfähigkeit gewährleistet und dieses in praxisbezogener Weise in kürzest möglichem Zeitraum ermittelt.

Vergleichsbeispiel a)

Im Vergleich zu Beispiel 1 wurde geprüft, ob bei Überschreitung einer definierten Ölmenge auf dem Substrat Haftprobleme auftreten können. Der Versuch des Beispiels 1 wurde wiederholt, jedoch wurden die Oberflächen der Absandhalterrücken nach der Reinigung mit einer definierten Menge Öl belegt.

Hierzu wurde eine Lösung aus n-Heptan mit einem 8-%igen Anteil Verformungsöl hergestellt. Die Abstandhalter wurden mit dieser Lösung bestrichen und 20 min an der Luft getrocknet.

Es wurde für den Vergleichsversuch eine Verweilzeit unter der Belastung wie in Beispiel 1 von 1 Std. als Prüfkriterium festgesetzt.

Die Prüfkörper erreichten diese Zeit nicht und es kam in allen Fällen innerhalb weniger Sekunden zu Ablösungen des Dichtstoffes vom Substrat.

Vergleichsbeispiel b)

Der Versuch des Beispiels 1 wurde wiederholt, jedoch wurden die Profile im Anlieferungszustand, d.h. ohne reinigende Nachbehandlung der Oberfläche, zur Herstellung der Dichtstoff-Probekörper verwendet. Bei den verwendeten Profilen handelte es sich um solche, bei denen der verdacht auf an der Oberfläche anhaftende Öl- oder Fettreste bestand.

Es sollte geprüft werden, ob die Probekörper mindestens 10 min bei der im Beispiel 1 vorgegebenen Belastung von 0,3 N/mm² unbeschädigt überstehen.

Alle 6 Prüfkörper erreichten nicht die im Versuch vorgegebene verweildauer von 10 min. Sie zeigten Beschädigungen an der Haftfläche oder Ablösungen bereits nach 3 bis 6 Minuten. Dieses Ergebnis zeigt, daß Öl- oder Fettreste auf der Oberfläche der Abstandhalter zu Beeinträchtigungen der Haftfähigkeit führen.

**Ansprüche**

1. Vorrichtung zum Bestimmen der Haftfähigkeit von Dichtstoffen an metallischen und nichtmetallischen Substraten, insbesondere Abstandhalter für Mehrscheibenisolierglas, dadurch gekennzeichnet, daß auf einer Grundplatte (1) ein Belastungshebel (2) mit verschiebbarem Gewicht (3) über ein Schneidenlager (4, 4a) gelagert ist, wobei das andere Hebelende (5) gabelförmig und mit Einrichtungen (6) an beiden Gabelenden zur Aufnahme eines Dichtstoff-Prüfkörpers (7) ausgebildet ist und unterhalb des gabelförmigen Hebelendes (5) auf der Grundplatte (1) eine korrespondierende gabelförmige Haltevorrichtung (8) mit Einrichtungen (9) an beiden Gabelenden zum Gegenhalt des Prüfkörpers angebracht ist.

2. Vorrichtung nach Anspruch 1, dadurch gekennzeichnet, daß der Prüfkörper (7) durch zwei metallische Abstandhalter-Hohlprofile (12) gebildet ist, zwischen deren einander zugekehrten Abstandhalter-Rücken (13) der Dichtstoff (14) eingebracht werden kann.

3. Vorrichtung nach den Ansprüchen 1 bis 2, dadurch gekennzeichnet, daß der Prüfkörper (7) mittels in die Hohlprofile (12) eingeschobener, stabartiger Einlegeteile (15) in die gabelförmigen Haltevorrichtungen (5, 8) eingebracht werden kann.

4. Vorrichtung nach den Ansprüchen 1 bis 3, dadurch gekennzeichnet, daß die Gabelenden hakenförmig ausgebildet sind.

5. Vorrichtung nach den Ansprüchen 1 bis 3, dadurch gekennzeichnet, daß die Gabelenden ösenartig ausgebildet sind.

6. Vorrichtung nach den Ansprüchen 1 bis 3, dadurch gekennzeichnet, daß die Gabelenden eine Lochbohrung aufweisen.

7. Vorrichtung nach den Ansprüchen 1 bis 6, dadurch gekennzeichnet, daß das Schneidenlager (4, 4a) gehärtet ist.

8. Vorrichtung nach den Ansprüchen 1 bis 7, dadurch gekennzeichnet, daß das verschiebbare Gewicht (3) mit Federraster (10) versehen ist.

**Claims**

1. Apparatus for determining the adhesiveness of sealing materials to metallic and non-metallic substrates, in particular spacers for multi-paned insulating glazing, characterised in that a load lever (2) with a movable weight (3) is mounted on a base plate (1) by means of a knife-edge bearing (4, 4a), the other end (5) of the lever being fork-shaped and designed with devices (6) at both fork ends for holding a sealing material test piece (7) and a corresponding fork-shaped holding device (8) with devices (9) at both ends of the fork for counter-holding the test piece being attached to the base plate (1) beneath the forkshaped end (5) of the lever.

2. Apparatus according to Claim 1, characterised in that the test piece (7) is formed by two metallic hollow spacer profiles (12), between the backs (13) of which, which face each other, the sealing material (14) can be introduced.

3. Apparatus according to Claims 1 to 2, characterised in that the test piece (7) can be introduced into the fork-shaped holding devices (5, 8) by means of rod-like inserts (15) inserted into the hollow profiles (12).

4. Apparatus according to Claims 1 to 3, characterised in that the ends of the fork are hooked.

5. Apparatus according to Claims 1 to 3, characterised in that the ends of the fork are designed like eyes.

6. Apparatus according to Claims 1 to 3, characterised in that the ends of the fork have a bore.

7. Apparatus according to Claims 1 to 6, characterised in that the knife-edge bearing (4, 4a) is hardened.

8. Apparatus according to Claims 1 to 7, characterised in that the movable weight (3) is provided with spring catches (10).


**Revendications**

1. Dispositif pour déterminer l'adhésivité de matériaux d'étanchéité sur des substrats métalliques et non métalliques, notamment sur des écarteurs pour du verre isolant à plusieurs vitres, caractérisé en ce qu'un levier de sollicitation (2) muni d'un poids coulissant (3) est monté par l'intermédiaire d'un couteau de répartition (4, 4a) sur un socle (1), l'autre extrémité (5) du levier étant réalisée en forme de fourche, avec des moyens (6) aux deux extrémités de la fourche pour recevoir un échantillon (7) de matériau d'étanchéité, et un dispositif de retenue correspondant en forme de fourche (8), avec des moyens (9) aux deux extrémités de la fourche pour retenir l'échantillon, étant fixé sur le socle (1) en dessous de l'extrémité de levier en forme de fourche (5).

2. Dispositif selon la revendication 1, caractérisé en ce que l'échantillon (7) est constitué de deux profilés creux écarteurs métalliques (12), le matériau d'étanchéité (14) pouvant être introduit entre les dos en vis-à-vis (13) des écarteurs.

3. Dispositif selon les revendications 1 et 2, caractérisé en ce que l'échantillon (7) peut être introduit dans les dispositifs de maintien en forme de fourches (5, 8) à l'aide de pièces d'insertion du genre tiges (15) enfilées dans les profilés creux (12).

4. Dispositif selon les revendications 1 à 3, caractérisé en ce que les extrémités des fourches sont réalisées en forme de crochets.

5. Dispositif selon les revendications 1 à 3, caractérisé en ce que les extrémités des fourches sont réalisées à la manière d'oeillets.

6. Dispositif selon les revendications 1 à 3, caractérisé en ce que les extrémités des fourches présentent un trou.

7. Dispositif selon les revendications 1 à 6, caractérisé en ce que le couteau de répartition (4, 4a) est trempé.

8. Dispositif selon les revendications 1 à 7, caractérisé en ce que le poids coulissant (3) est muni d'un cran d'arrêt élastique (10).

Fig. 1

a)

b)

Fig. 2